# EUROPEAN PATENT SPECIFICATION

(11) **EP 2 446 619 B1**
(45) Date of publication and mention of the grant of the patent: **07.10.2015**
(21) Application number: 10792382.3
(22) Date of filing: 03.05.2010
(51) Int. Cl.: H04N 7/14, H04N 7/15, G06F 3/048

(54) **METHOD AND DEVICE FOR MODIFYING A COMPOSITE VIDEO SIGNAL LAYOUT**
VERFAHREN UND VORRICHTUNG ZUR ÄNDERUNG EINES VERBUNDVIDEOSIGNAL-LAYOUTS
PROCÉDÉ ET DISPOSITIF POUR MODIFIER L'ORDONNANCEMENT D'UN SIGNAL VIDÉO COMPOSITE

(30) Priority: 24.06.2009 NO 20092407
(43) Date of publication of application: 02.05.2012
(73) Proprietor: Cisco Systems International Sarl, 1180 Rolle (CH)
(72) Inventor: KRISTIANSEN, Ivan, Marius, N-0168 Oslo (NO); HAMMER, Vegard, N-1258 Oslo (NO); BJUN, Geir, N-1368 Høvik (NO)
(74) Representative: Kazi, Ilya
(86) International application number: PCT/NO2010/000165
(87) International publication number: WO 2010/151137

(56) References cited:
- WO-A1-99/52063
- WO-A1-03/063484
- WO-A1-03/063484
- WO-A1-2009/058641
- US-A1- 2006 026 521
- US-A1- 2006 026 521
- US-A1- 2006 066 717
- US-A1- 2006 066 717

## Description

### Field of the invention

The invention relates to.a touch screen control system for a video conferencing system, and more specifically a method and device for modifying the layout of a composite video signal generated by a video composing Server 26.

### Background

Conventional videoconferencing systems comprise a number of end-points communicating real-time video, audio and/or data (often referred to as duo video) streams over and between various networks such as WAN, LAN and circuit switched networks.

A number of videoconference systems residing at different sites may participate in the same conference, most often, through one or more MCU's (Multipoint Control Unit) performing e.g. switching and mixing functions to allow the audiovisual terminals to intercommunicate properly.

An MCU may be a stand alone device operating as a central network recourse, or it could be integrated in the codec of a video conferencing system. An MCU links the sites together by receiving frames of conference signals from the sites, processing the received signals, and retransmitting the processed signals to appropriate sites.

In a continuous presence conference, video signals and/or data signals from two or more sites are spatially mixed to form a composite video signal for viewing by conference participants. The composite video signal is a combined video signal that may include live video streams, still images, menus or other visual images from participants in the conference. There are unlimited number of possibilities of how the different video and/or data signals are spatially mixed, e.g. size and position of the different video and data frames in the composite image. A Codec and/or MCU typically have a set of preconfigured composite video signal templates stored on the MCU or video conference codec 202 allocating one or more regions within a composite video signal for one or more video and/or data streams received by the MCU or codec. The different compositions of the composite video signals are hereafter referred to as layouts.

Typically all conference attendees receive the same layout, however some MCU's allow attendees to select their own personal layout. The conference owner chooses the layout before the conference starts. The layout may be changed during a video conference by the conference owner.

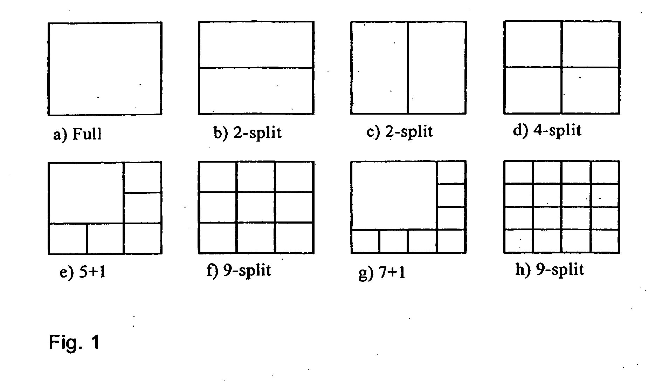

Known video conferencing systems generally allow users to choose layout in two ways. One way is to choose layout in a video conferencing management system (VCMS). A VCMS is a network device configured to schedule conference calls and manage/configure video conference devices. A VCMS typically provide a web based user interface where a user can select the preferred layout for a scheduled conference or an ongoing conference. The other way is to select layout using a standard input device, such as a keypad on a remote control or a mouse. The latter is typical for video conference systems with embedded MCU's. However, common for both methods is that the user can only choose one of a set of preconfigured type of layouts, e.g. continuous presence (all participants present on the screen) or voice switched (the speaker covers the entire screen). FIG. 1 illustrates a set of typical continuous presence layouts. Further, known methods of changing layout during a call require a user to be familiar with the video conferencing systems on-screen menus and often require several iterations through the menus by pushing buttons on a remote control, which makes it cumbersome and distracting.

Today, users of technical installation are accustomed to and demand systems which are easy to use and provide flexibility in ways of customization of graphical environments and collaboration between devices. Traditional video conferencing systems are not very flexible. For example, regardless of layout selected by a user when initiating a continuous presence and/or a Duo Video call, the order, positions and sizes of the different video and/or data stream in the composite image is beyond the user's control. Further, traditional video conferencing systems are operated using on-screen menu systems controlled by a keypad on an IR remote control device, allowing for limited flexibility and cumbersome user expedience.

WO-A1-03/063484 describes a videoconference system that can be controlled by an end user, via a graphical user interface, without the assistance of an operator.

WO-A1-99/52063 describes a method of tracking video entities in a video sequence and applying different post-processing operations to the video entities in at least one frame. US-A1-2006/066717 describes a videoconference system with a plurality of clients, in which a method for controlling mixing of data streams is provided.

US-A1-2006/026521 describes a method and system for processing touch inputs including reading data from a multipoint sensing device.

### SUMMARY OF THE INVENTION

It is an object of the present specification to provide a device and method that eliminates the drawbacks described above. The features defined in the independent claim enclosed characterize this device and method.

The present invention discloses a device and a method for modifying a composite video signal generated by a video composing Server 26, by providing on a touch screen a graphical representation of said composite video signal, modifying the graphical representation using said touch screen and in response modifying said composite video signal to conform with said modified graphical representation.

### Brief description of the drawings

The foregoing and other objects, features and advantages of the invention will be apparent from the following more particular description of preferred embodiments of the invention, as illustrated in the accompanying drawings in which like reference characters refer to the same parts throughout the different views. The drawings are not necessarily to scale, emphasis instead being placed upon illustrating the principles of the invention.
- FIG. 1: is a schematic overview of typical continuous presence layouts (prior art);
- FIG. 2: is a schematic overview of the touch screen control system of the present invention;
- FIG. 3: is a block diagram of the present invention;
- FIG. 4: is a schematic overview of one exemplary embodiment of the present invention;
- FIG. 5: is a schematic overview of another exemplary embodiment of the present invention;
- FIG. 6: is a schematic overview of another exemplary embodiment of the present invention;
- FIG. 7: is a flow diagram illustrating the method according to the present invention, and
- FIG. 8: illustrates a computer system upon which an embodiment of the present invention may be implemented.

### DETAILED DESCRIPTION

Aspects of the invention are set out in the independent claim and preferred features are set out in the dependent claims. In the following, a device and method will be discussed by describing various embodiments, and by referring to the accompanying drawings. However, people skilled in the art will realize that other applications and modifications within the scope of the invention as defined in the enclosed independent claims.

One embodiment relates to a method and device for modifying the image layout of a composite video signal (e.g. duo video or continuous presence video conference). A layout control unit according to the embodiment may be end user component that presents graphical representation of the current video composition to the user, and allows the user to manipulate the composition using the touch screen.

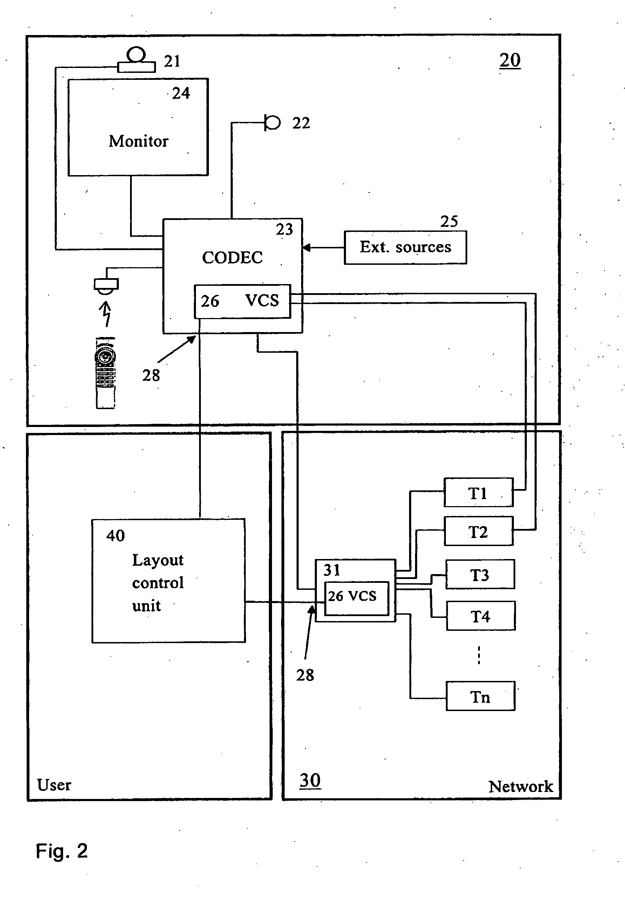

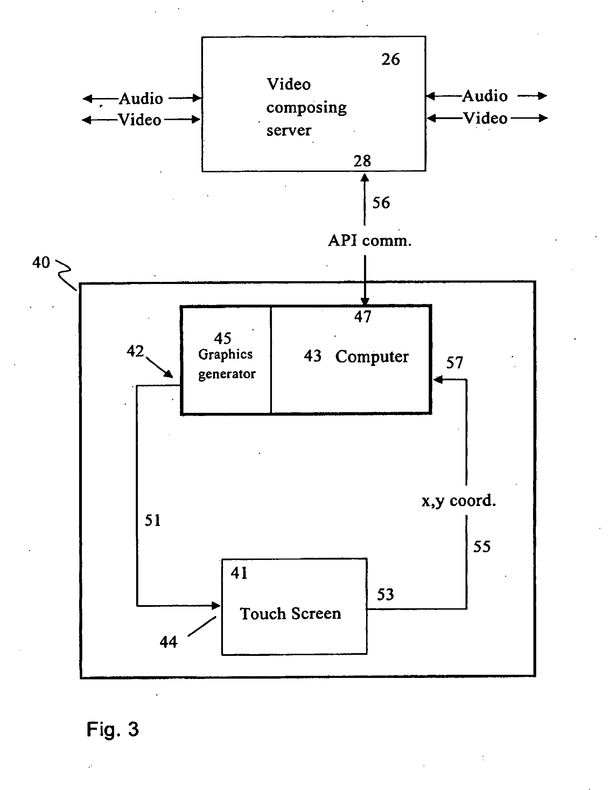

Reference is first made to FIGS. 2 and 3. With particular reference to FIG. 2, a video. conferencing system is generally designated by the reference numeral 20. The system 20 includes a camera 21 and a microphone 22 supplying video and audio signals to a CODEC 23, which supplies audio-video signals to one or more monitor(s) 24. The CODEC 23 may also be supplied with signals from external multimedia sources 25, e.g. VCR's, DVD players, document cameras, personal computers, etc. The CODEC 23 may receive data signals (e.g. video, audio, still images, etc) from the external sources to be displayed on the monitor(s) 24, and/or the signals from the external sources may be sent to other video conferencing systems (**T1-Tn**) connected to the video conferencing system **20** via a network **30.**

The codec **23** may have an embedded Multipoint Control Unit (MCU) **26** configured to send/receive conference signals (audio/video/data streams) to/from video conferencing systems (**T1-Tn**) over a network **30.** Alternatively, the CODEC **23** may connect to a centralized MCU **31** via a network **30**. An MCU **26**;**31** links sites together by receiving frames of conference signals from the sites, processing the received signals, and retransmitting the processed signals to appropriate sites.

An MCU comprise at least a Video Composing Server 26 **26** which is configured to spatially mix video signals and/or data signals from two or more video conferencing system to form a composite video signal (se figure 1 for typical configurations of composite video signals, also referred to as picture-by-picture) for viewing by conference participants. The video signals and data signals are also referred to as video conference streams.

According to one embodiment of the invention, the video composing Server 26 has an API that allows users to programmatically change the video composition according to personal preferences using a layout control unit **40**. "API" is an abbreviation for "Application Programming Interface". With further reference to FIG. 2, API communications between the layout control unit **40** and the video composing server 26 are exchange via a port **28** in the video composing server 26 and a port **27** in the layout control unit **40**. This interface accessed via the port **28** permits the present invention to communicate with the video composing server 26, so that the layout control unit **40** according to the present invention can provide the video composing server 26 with a desired series of commands and receive responses from the video composing Server 26.

According to one embodiment of the invention, the video composing Server 26 is part of an MCU embedded in a CODEC **23** of a video conferencing terminal, and where the video composing Server 26 has a port **28** in the CODEC for exchanging API communication.

According to another embodiment of the invention, the video composing Server 26 is a network device or part of a network device, such as a centralized MCU **31**, and where the network device has a port **28** for exchanging API communication.

With reference to FIG. 3, the components of the present invention are generally designated by the reference numeral **40** and are seen to comprise a touch screen unit **41**, a personal computer **43** and a graphics generator **45**. The graphics generator may be part of the computer **43**, or may also be a separate computational device connected to the computer 43. As seen, the personal computer **43** has a port **47** to which is coupled a communication link **56** coupled to the API communications port **28** of the video composing Server 26.

The touch screen **41** comprises an LCD screen or other video display technology (CRT, OLED, Plasma, etc.) that can be of varying size. In addition to the display screen, the touch screen 41 contains hardware that overlays the display screen with a matrix of x' and y' coordinate detectors. When an object applies pressure (touch) to the touch screen, it transmits a command to the computer **43** comprising the x' and y' coordinates of the point where the pressure was applied.

The layout control unit 40 communicates with the Video Composing Server 26 using the previously mentioned API. The communication between the video composing Server 26 and the layout control unit comprise commands at least comprising a layout configuration. The layout configuration describes the composition of a layout. The layout configuration at least identifies the size and position of areas (or frames) for displaying a video or data stream, and a video/data source ID identifying the stream to be displayed in a given area (or frame).

In response to receiving a layout configuration from the video composing Server 26, the graphics generator **45** under control of the personal computer **43** provides to the touch screen **41** via a port **42** a graphical representation of the current composite video signal (layout) generated and output by the video composing Server 26. The graphical representation is composed of graphical objects, where an object represents a video stream or data stream in the composite video output by the video composing unit. The graphical representation may comprise a visible boundary line to illustrate to the user the total available area of the composite video signal. Alternatively a boundary line is not visible in the graphical representation, but the user is alerted (given a visual cue) if a user is trying to drag or place objects outside a non-visible boundary line. The video and/or data stream in the composite video signal and the graphical objects in the graphical representation are arranged in a corresponding order and in corresponding relative positions and sizes.

According to one embodiment of the present invention the graphical objects are images illustrating the content of the video and/or data streams (video conference streams) the graphical objects represent. Said image may be an outline of one or more persons, a computer generated image, a photograph, text describing the content (name of participant, name of video conferencing system, "presentation", "movie", etc), a screen shot from the video conferencing system or computer providing a video/data stream, or a combination of two or more of the above. According to another embodiment of the present invention the graphical objects are movie clips, animations or live video feed from a video conferencing system or an external source.

When a user touches the screen of the touch screen system **41** with an object (e.g. finger or stylus), the x and y location coordinates corresponding to the location of the object touching the screen are transmitted to the computer 43 and graphics generator **45** via the port **53**, the conductor **55** and a port **57** on the computer **43**. If a user touches coordinates within an area on the screen displaying one of the graphical objects, the user may manipulate the object by performing certain gestures on the touch screen.

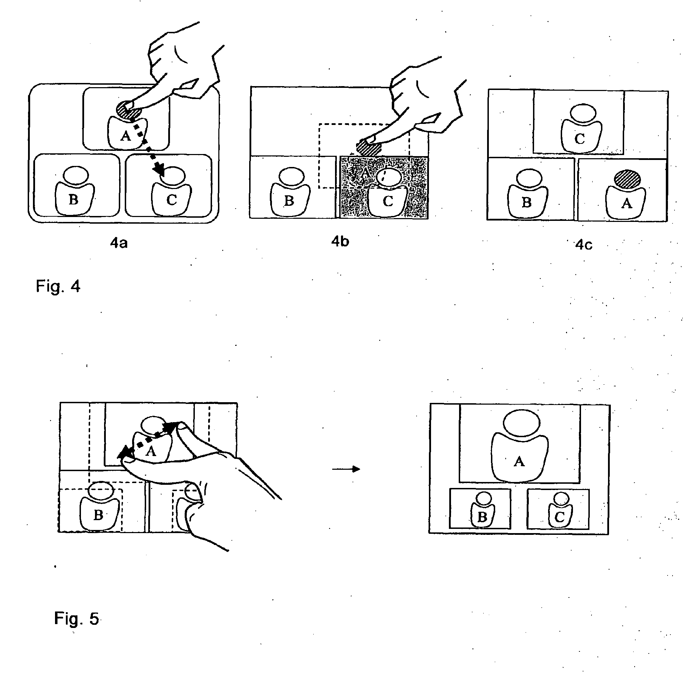

According to one embodiment of the present invention the user may rearrange the order of the graphical objects by dragging and dropping objects in the graphical representation on the touch screen. Two objects switch place when one object is dragged and dropped onto another object in the graphical representation, as illustrated in figure 4a-4c.

According to another embodiment of the present invention the user may modify the position of the graphical objects by dragging and dropping the objects onto arbitrary position within the boundary line. The boundary line represents the total available area in the composite video signal generated by the video composing Server 26. In other words, the boundary line represents the image displayed to a user on a display 24.

According to yet another embodiment of the present invention the user may resize the graphical objects. The resizing may be performed by applying a gesture recognized by the computer 43, e.g. by applying a pinching movement of two or more fingers while continuously applying pressure to the touch screen over a graphical object, as illustrated in figure 5a. According to yet another embodiment, when a user is resizing a graphical object, the graphics generator will automatically adapt the size of the other graphical objects in the graphical representation to avoid overlap of the graphical objects, as illustrated in figure 5a-5b.

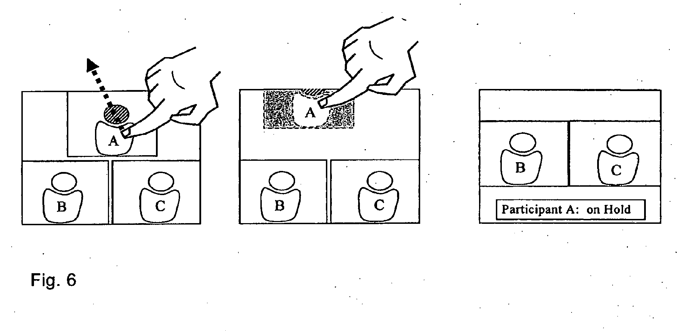

According to yet another embodiment of the present invention the user may remove an object from the graphical representation to allow more space for the remaining objects. The removal of an object may be performed by dragging and dropping an object or parts of an object outside the boundary line or the edge of the screen, as illustrated in figure 6a-6c. The stream represented by the removed object may remain in the call (but will not be displayed), or the conference call represented by that graphical object is placed on hold or may be disconnected from the call. The user may modify the remaining objects according to liking, or the graphics generator may modify the remaining objects automatically to best fit within the boundary line.

Next, When the user have modified the graphical representation on the touch screen by manipulating the graphical object(s) according to one or more of the embodiments above, the computer **43** transmits a command (or signal) comprising a layout configuration describing the modified graphical representation to the video composing Server 26 via the port **47**, the communication link **56** and a port **28** on the video composing Server 26. In response to the received layout configuration from the computer **43**, the video composing Server 26 modifies the composition of the composite video signal according to the layout configuration, and hence in accordance to the modified graphical representation on the touch screen.

According to one embodiment of the present invention, a layout configuration is automatically sent to the video composing Server 26 if the computer 43 or graphics generator **45** detects a modification in the graphical representation (e.g. modification in positions, sizes, etc.).

According to another embodiment of the present invention, a layout configuration is only sent to the video composing Server 26 upon request/confirmation from a user. This allows a user to redesign and review the layout before instructing the video composing Server 26 to modify the video composition. This is especially useful in situation where the graphical objects are live video feed from a video conferencing systems or a external source 25, allowing the user to try out different layouts with the actual video and/or data streams, giving a realistic preview of the layout before accepting or rejecting changes.

According to one embodiment of the present invention, the layout control unit is a dedicated device. The dedicated device may be a default part of the video conferencing system, or be an add-on device acquired separately.

According to another embodiment of the present invention, a portable computing device, such as a personal digital assistant, mobile phone, laptop computer or similar portable computing device having a touch screen interface and a communication interface supported by the video composing Server 26 (e.g. TCP/IP), may be utilized as the Layout control unit. A client software (layout control client) may be downloaded and/or installed on such a portable computing device enabling the portable computing device as a layout control unit according to the present invention.

The computer 43 in the layout control unit 40 may in addition to a processor include a memory medium(s) on which one or more computer programs or software components according to one embodiment of the present invention may be stored. For example, the graphics generator to be deployed may be stored on the memory medium of the computer 43. Also, the memory medium may store a graphical programming development application used to create the graphics generator, as well as software operable to convert and/or deploy the graphics generator on the portable computing device. The memory medium may also store operating system software, as well as other software for operation of the computer system.

FIG. 3 is similar to FIG. 2, but concentrates on the components of the present invention as explained above. Like reference numerals in FIG. 3 refer to like components in FIG. 2. The inventive system **40** permits control of the video composing Server 26 through the use of the easy-to-use touch screen **44** which is controlled by the personal computer **43**, an intelligent device that ensures logical operation, may give users second chances through display of a request to verify that a correct choice has been made, and guards against erroneous operations.

In more detail, the computer **43** is capable of executing logical instructions written in a computer programming language. The computer **43** controls operation of the video composing Server 26 via a PCI or other appropriate bus physically installed in the computer **43;** with the video composing Server 26 via a communication link **56** schematically represented in FIG. **3****.** According to one exemplary embodiment of the present invention the communication between the computer 43 and the video composing Server 26 13 is exchanged using TCP/IP over communication link **56**. Communication link **56** may be a wired or wireless link, such as PAN, CAN, MAN, LAN, WLAN, WAN, etc. The communication between the video composing Server 26 and the computer are commands that go back and forth between the port **47** of the computer **43** and the port **28** of the CODEC/video composing Server 26. As should be understood, these communications conform to the manufacturer's Application Programming Interface (API) of the video composing Server 26.

Communications also occur using the touch screen **41** via a communications link shown in FIG. 3 and designated by the reference numeral **55** for the conductor and **53** and **57** for the ports. Images from the graphics generator 45 is transferred to and displayed on the touch screens display via port 42, conductor 51 and port 44.

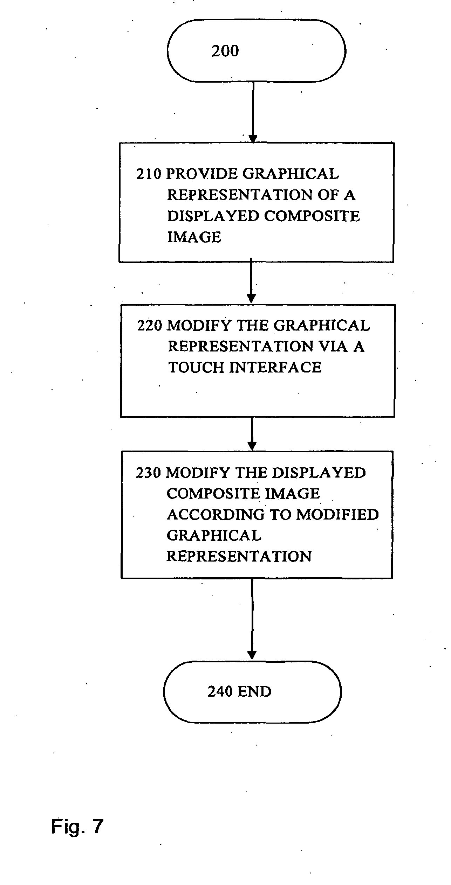

With reference to figure 7, all communication between the video composing Server 26 and the computer 43 follows a similar procedure. With reference to figure 7, when predefined events occur, the video composite Server 26 starts 200 by sending a command/signal to the computer 43, at least comprising a layout configuration defining the video composition currently used by the video composite Server 26. Said predefined event may include: when a video conference is started, when the video composition is changed, when a layout control unit connects to the video composing Server 26 during a conference, on request from the layout control unit, etc. For example, a user D calls participant A, participant B and participant C using a video conferencing system as illustrated in figure 2. The video composing Server 26 generates a composite video signal as shown in figure 6a. The video conferencing system is already connected to a layout control unit according to the present invention, and when the conference starts the video composing Server 26 sends a command to the computer 43, identifying at least the position, size and ID of each video/data stream via a layout configuration.

Next in step 210, the graphics generator creates a graphical representation of the current video composition used by the video composing Server 26, based on the received layout configuration. As described above, the graphical representation comprises a graphical object for each video/data stream in the composite video signal, where the relative positions and sizes of the graphical objects corresponds to the relative positions and sizes of the video/data streams in the composite video signal. The graphics generator sends the graphical representation (image) to the touch screen 41 via the port 42, communication link 51 and port 44 on the touch screen 41.

Next in step 220, a user can modify the graphical objects in the graphical representation by touching the touch screen 41 and performing finger gestures on the touch screen 41 as described in more detail above. Responsive to that touching, the touch screen 42 transmits the x and y coordinates of the touched area or areas to the computer 43 via port 53, communication link 55 and port 57. The computer 43 and the graphics generator process the information from the touch screen and update the graphical representation, and hence the image displayed on the touch screen, live.

Next in step 230, if the computer and the graphics generator detects that one or more of the objects have been modified, the computer 43 sends a command to the video composing Server 26, at least comprising a layout configuration identifying the new position(s) and size(s) of the modified object(s). According to one embodiment, a command comprising a layout configuration defining the position and sizes of all the graphical objects in the modified graphical representation is sent to the video composing Server 26, even if modifications only are made to one object. In response to the received command (layout configuration) from the computer 43, the video composing Server 26 modifies the composite video signal to correspond to the new layout defined by the graphics generator.

In a final step 240, the Video composing Server 26 then sends an action completed signal to the computer 43 via the port 28, communication link 56 and port 47. Once the action has been completed in the manner described above, the computer 43 awaits indication of the next touch of the screen 41 by the user.

According to one embodiment of the present invention, the layout configuration described above is an XML document defining the position, size and ID of all the streams in the layout. An exemplary XML document according to one embodiment of the present invention may look like this:

```
 <video>
  <layout>
       <frame item=l>
            <PositionX>10000</PositionX>
            <PositionY>10000</PositionY>
            <Width>4084</Width>
            <Height>4084</Height>
            <VideoSourceId>1</VideoSourceId>
       <frame item=2>
            <PositionX>5000</PositionX>
            <PositionY>5000</PositionY>
            <Width>4084</Width>
            <Height>4084</Height>
            <VideoSourceId>2</VideoSourceId>
```

Video signals and/or data signals from two or more video conferencing systems are spatially mixed to form a composite video signal. The area occupied by a video or data signal is referred to as a frame. When the video composing server 26 mixes the video and/or data signals it needs to know the exact position and size of each frame. Therefore, the layout configuration at least defines the position, size and an identifier identifying the video/data source, for each frame. Referring to the exemplary XML document above, the <position> of the different frames that make up a layout (composite video signal) is given in top left coordinates. The <Width> and <Height> define the size of the frame in pixel values. The VideoSourceId relates to the video/data source currently playing in a frame. All coordinates and sizes are calculated from the assumption that the size of the entire layout is 10000 by 10000 pixels (units). This is because the layout may be presented in different resolutions, e.g. the resolution of the touch screen can be 1024*768 pixels while the resolution of the video composing server's 26 output is 1920*1080. By using a fixed unit size in the layout configuration, the layout control unit can calculate the object sizes and position for the graphical representation from the layout configuration measures, and visa versa, without having to consider the resolution of the video composing server 26.

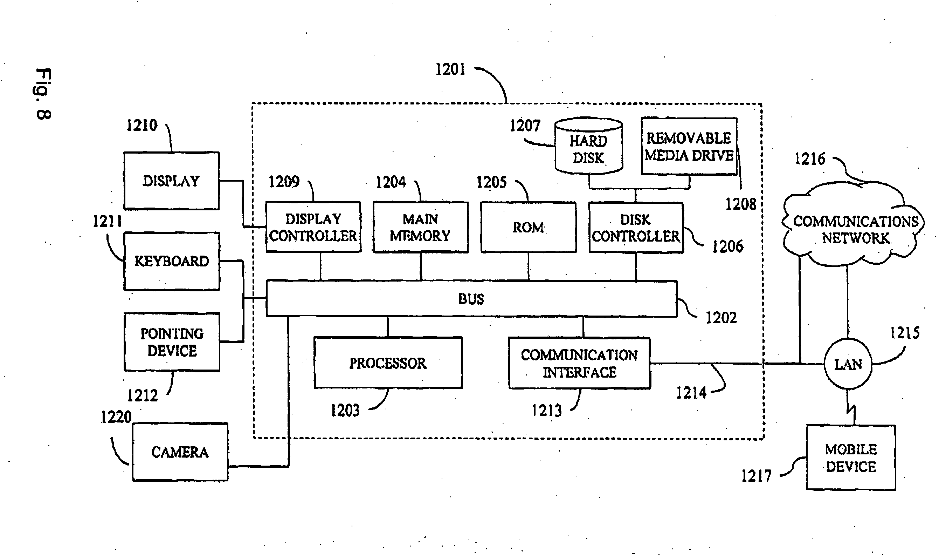

FIG. 8 illustrates a computer 1201 upon which an embodiment may be implemented. For example, this computer system may be implemented. The computer system 1201 includes a bus 1202 or other communication mechanism for communicating information, and a processor 1203 coupled with the bus 1202 for processing the information. The computer system 1201 also includes a main memory 1204, such as a random access memory (RAM) or other dynamic storage device (e.g., dynamic RAM (DRAM), static RAM (SRAM), and synchronous DRAM (SDRAM)), coupled to the bus **1202** for storing information and instructions to be executed by processor **1203**. In addition, the main memory **1204** may be used for storing temporary variables or other intermediate information during the execution of instructions by the processor **1203**. The computer system **1201** further includes a read only memory (ROM) **1205** or other static storage device (e.g., programmable ROM (PROM), erasable PROM (EPROM), and electrically erasable PROM (EEPROM)) coupled to the bus **1202** for storing static information and instructions for the processor **1203**.

The computer system **1201** also includes a disk controller **1206** coupled to the bus **1202** to control one or more storage devices for storing information and instructions, such as a magnetic hard disk **1207**, and a removable media drive **1208** (e.g., floppy disk drive, read-only compact disc drive, read/write compact disc drive, compact disc jukebox, tape drive, and removable magneto-optical drive). The storage devices may be added to the computer system **1201** using an appropriate device interface (e.g., small computer system interface (SCSI), integrated device electronics (IDE), enhanced-IDE (E-IDE), direct memory access (DMA), or ultra-DMA).

The computer system **1201** may also include special purpose logic devices (e.g., application specific integrated circuits (ASICs)) or configurable logic devices (e.g., simple programmable logic devices (SPLDs), complex programmable logic devices (CPLDs), and field programmable gate arrays (FPGAs)).

The computer system **1201** may also include a display controller **1209** coupled to the bus **1202** to control a display **1210**, such as a cathode ray tube (CRT) or LCD display, for displaying information to a computer user. The computer system includes input devices, such as a keyboard **1211** and a pointing device **1212**, for interacting with a computer user and providing information to the processor **1203**. The pointing device **1212**, for example, may be a mouse, a trackball, or a pointing stick for communicating direction information and command selections to the processor **1203** and for controlling cursor movement on the display **1210.** In addition, a printer may provide printed listings of data stored and/or generated by the computer system **1201**.

The computer system **1201** performs a portion or all of the processing steps in an embodiment of the invention in response to the processor **1203** executing one or more sequences of one or more instructions contained in a memory, such as the main memory **1204**. Such instructions may be read into the main memory **1204** from another computer readable medium, such as a hard disk **1207** or a removable media drive **1208**. One or more processors in a multi-processing arrangement may also be employed to execute the sequences of instructions contained in main memory **1204**. In alternative embodiments, hard-wired circuitry may be used in place of or in combination with software instructions. Thus, embodiments are not limited to any specific combination of hardware circuitry and software.

As stated above, the computer system **1201** includes at least one computer readable medium or memory for holding instructions programmed according to the teachings of the invention and for containing data structures, tables, records, or other data described herein. Examples of computer readable storage media are compact discs, hard disks, floppy disks, tape, magneto-optical disks, PROMs (EPROM, EEPROM, flash EPROM), DRAM, SRAM, SDRAM, or any other magnetic medium, compact discs (e.g., CD-ROM), or any other optical medium, punch cards, paper tape, or other physical medium with patterns of holes. Also, instructions may be stored in a carrier wave (or signal) and read therefrom.

Stored on any one or on a combination of computer readable storage media, the embodiments of the present invention include software for controlling the computer system **1201**, for driving a device or devices for implementing the invention, and for enabling the computer system **1201** to interact with a human user. Such software may include, but is not limited to, device drivers, operating systems, development tools, and applications software.

The computer code devices of the present invention may be any interpretable or executable code mechanism, including but not limited to scripts, interpretable programs, dynamic link libraries (DLLs), Java classes, and complete executable programs. Moreover, parts of the processing of the present invention may be distributed for better performance, reliability, and/or cost.

The term "computer readable storage medium" as used herein refers to any physical medium that participates in providing instructions to the processor **1203** for execution. A computer readable storage medium may take many forms, including but not limited to, non-volatile media and volatile media. Non-volatile media includes, for example, optical, magnetic disks, and magneto-optical disks, such as the hard disk **1207** or the removable media drive **1208**. Volatile media includes dynamic memory, such as the main memory **1204**.

Various forms of computer readable storage media may be involved in carrying out one or more sequences of one or more instructions to processor **1203** for execution. For example, the instructions may initially be carried on a magnetic disk of a remote computer. The remote computer can load the instructions for implementing all or a portion of the present invention remotely into a dynamic memory and send the instructions over a telephone line using a modem. A modem local to the computer system **1201** may receive the data on the telephone line and use an infrared transmitter to convert the data to an infrared signal. An infrared detector coupled to the bus **1202** can receive the data carried in the infrared signal and place the data on the bus **1202**. The bus **1202** carries the data to the main memory **1204**, from which the processor **1203** retrieves and executes the instructions. The instructions received by the main memory **1204** may optionally be stored on storage device **1207** or **1208** either before or after execution by processor **1203**.

The computer system **1201** also includes a communication interface **1213** coupled to the bus **1202**. The communication interface **1213** provides a two-way data communication coupling to a network link **1214** that is connected to, for example, a local area network (LAN) **1215**, or to another communications network **1216** such as the Internet. For example, the communication interface **1213** may be a network interface card to attach to any packet switched LAN. As another example, the communication interface **1213** may be an asymmetrical digital subscriber line (ADSL) card, an integrated services digital network (ISDN) card or a modem to provide a data communication connection to a corresponding type of communications line. Wireless links may also be implemented. In any such implementation, the communication interface **1213** sends and receives electrical, electromagnetic or optical signals that carry digital data streams representing various types of information.

The network link **1214** typically provides data communication through one or more networks to other data devices. For example, the network link **1214** may provide a connection to another computer through a local network **1215** (e.g., a LAN) or through equipment operated by a service provider, which provides communication services through a communications network **1216**. The local network **1214** and the communications network **1216** use, for example, electrical, electromagnetic, or optical signals that carry digital data streams, and the associated physical layer (e.g., CAT 5 cable, coaxial cable, optical fiber, etc). The signals through the various networks and the signals on the network link **1214** and through the communication interface **1213**, which carry the digital data to and from the computer system **1201** may be implemented in baseband signals, or carrier wave based signals. The baseband signals convey the digital data as unmodulated electrical pulses that are descriptive of a stream of digital data bits, where the term "bits" is to be construed broadly to mean symbol, where each symbol conveys at least one or more information bits. The digital data may also be used to modulate a carrier wave, such as with amplitude, phase and/or frequency shift keyed signals that are propagated over a conductive media, or transmitted as electromagnetic waves through a propagation medium. Thus, the digital data may be sent as unmodulated baseband data through a "wired" communication channel and/or sent within a predetermined frequency band, different than baseband, by modulating a carrier wave. The computer system **1201** can transmit and receive data, including program code, through the network(s) **1215** and **1216**, the network link **1214** and the communication interface **1213**. Moreover, the network link **1214** may provide a connection through a LAN **1215** to a mobile device **1217** such as a personal digital assistant (PDA) laptop computer, or cellular telephone.

Numerous modifications and variations of the present invention are possible in light of the above teachings. It is therefore to be understood that within the scope of the appended claims, the invention may be practiced otherwise than as specifically described herein.

## Claims

1. A method for modifying a composite video signal generated by a video composing server (26), said composite video signal being a spatial mix of two or more video conference streams, **characterized in**:
displaying on a touch screen (41) a graphical representation of said composite video signal (210), where said graphical representation comprises two or more graphical objects, where each graphical object represents one of said video conference streams, and where said two or more video conference streams and said two or more graphical objects are arranged in a corresponding order and corresponding relative positions and sizes;
where the step of displaying further comprise the steps of:
receiving a layout configuration describing the currently generated composite video signal, from the video composing server (26), and
generating a graphical representation based on said layout configuration describing the currently generated composite video signal;
receiving input from a user using said touch screen (220) to modify the graphical representation;
modifying said composite video signal to conform with said modified graphical representation (230), where said composite video signal conforms with said modified graphical representation when said video conference streams are spatially mixed according to the order and/or position and/or size of the graphical objects on the touch screen (41);
where the step of modifying said composite video signal (230) further comprise the steps of:
generating a layout configuration based on the order and/or position and/or size of the graphical objects on the touch screen,
sending a command or signal comprising said layout configuration based on the order and/or position and/or size of the graphical objects on the touch screen, to said video composing server (26), and
instructing said video composing server (26) to modify the composite video signal according to said layout configuration based on the order and/or position and/or size of the graphical objects on the touch screen.

2. A method according to claim 1, where the step of modifying said graphical representation comprise the step of modifying the order and/or position and/or size of one or more of said graphical objects.

3. A method according to claim 1, where said sending and receiving of said layout configuration is performed over a TCP/IP connection using Application Programming Interface (API) signals (56).

4. A method according to claim 1, where the step of modifying said graphical representation comprise the step of removing one or more of said graphical objects or adding a graphical object.

5. A method according to claim 3, where a video conference stream is placed on hold when a graphical object representing said video conference stream is removed from the graphical representation.

6. A method according to one of the preceding claims, where the graphical representation further comprise a border line representing the entire composite video signal, and where removing a graphical object is performed by dragging and dropping at least parts of the graphical objects outside the border line.

7. A set of processing instructions, tangibly stored in a memory, on a medium, or on a propagated signal, causing a touch screen device (40) to perform the method as set forth in one of the claims 1-6 when executed by a processor included in said touch screen device.

8. Touch screen device (40), comprising a processor, a memory and a touch screen system (41), said memory comprising a set of processing instructions as set forth in claim 7.

## Patentansprüche

1. Verfahren zum Modifizieren eines Composite-Videosignals, das von einem Video-Compositing-Server (26) erzeugt wird, wobei das genannte Composite-Videosignal eine räumliche Mischung von zwei oder mehr Videokonferenzströmen ist, **gekennzeichnet durch**:
Anzeigen, auf einem Berührungsbildschirm (41), einer grafischen Darstellung des genannten Composite-Videosignals (210), wobei die genannte grafische Darstellung zwei oder mehr Grafikobjekte umfasst, wobei jedes Grafikobjekt einen der genannten Videokonferenzströme repräsentiert und wobei die genannten zwei oder mehr Videokonferenzströme und die genannten zwei oder mehr Grafikobjekte in einer entsprechenden Reihenfolge und in entsprechenden relativen Positionen und Größen angeordnet sind;
wobei der Schritt des Anzeigens ferner die folgenden Schritte beinhaltet:
Empfangen einer Layout-Konfiguration, die das derzeit erzeugte Composite-Videosignal beschreibt, von dem Video-Compositing-Server (26), und
Erzeugen einer grafischen Darstellung auf der Basis der genannten Layout-Konfiguration, die das derzeit erzeugte Composite-Videosignal beschreibt;
Empfangen einer Eingabe von einem Benutzer unter Verwendung des genannten Berührungsbildschirms (220) zum Modifizieren der grafischen Darstellung;
Modifizieren des genannten Composite-Videosignals, so dass es der genannten modifizierten grafischen Darstellung (230) entspricht, wobei das genannte Composite-Videosignal der genannten modifizierten grafischen Darstellung entspricht, wenn die genannten Videokonferenzströme gemäß der Reihenfolge und/oder Position und/oder Größe der Grafikobjekte auf dem Berührungsbildschirm (41) räumlich gemischt sind;
wobei der Schritt des Modifizierens des genannten Composite-Videosignals (230) ferner die folgenden Schritte beinhaltet:
Erzeugen einer Layout-Konfiguration auf der Basis der Reihenfolge und/oder Position und/oder Größe der Grafikobjekte auf dem Berührungsbildschirm,
Senden eines Befehls oder Signals, der/das die genannte Layout-Konfiguration umfasst, auf der Basis der Reihenfolge und/oder Position und/oder Größe der Grafikobjekte auf dem Berührungsbildschirm, zu dem genannten Video-Compositing-Server (26), und
Anweisen des genannten Video-Compositing-Servers (26), das Composite-Videosignal gemäß der genannten Layout-Konfiguration auf der Basis der Reihenfolge und/oder Position und/oder Größe der Grafikobjekte auf dem Berührungsbildschirm zu modifizieren.

2. Verfahren nach Anspruch 1, wobei der Schritt des Modifizierens der genannten grafischen Darstellung den Schritt des Modifizierens der Reihenfolge und/oder Position und/oder Größe von einem oder mehreren der genannten Grafikobjekte beinhaltet.

3. Verfahren nach Anspruch 1, wobei das genannte Senden und Empfangen der genannten Layout-Konfiguration über eine TCP/IP-Verbindung unter Verwendung von API-(Application Programming Interface)-Signalen (56) ausgeführt wird.

4. Verfahren nach Anspruch 1, wobei der Schritt des Modifizierens der genannten grafischen Darstellung den Schritt des Entfernens von einem oder mehreren der genannten Grafikobjekte oder das Hinzufügen eines Grafikobjekts beinhaltet.

5. Verfahren nach Anspruch 3, wobei ein Videokonferenzstrom auf Halten gesetzt wird, wenn ein den genannten Videokonferenzstrom repräsentierendes Grafikobjekt von der grafischen Darstellung entfernt wird.

6. Verfahren nach einem der vorherigen Ansprüche, wobei die grafische Darstellung ferner eine Grenzlinie umfasst, die das gesamte Composite-Videosignal darstellt, und wobei das Entfernen eines Grafikobjekts durch Ziehen und Fallenlassen von wenigstens Teilen eines Grafikobjekts außerhalb der Grenzlinie durchgeführt wird.

7. Satz von Verarbeitungsbefehlen, die fassbar in einem Speicher auf einem Medium oder auf einem propagierten Signal gespeichert sind und bewirken, dass ein Berührungsbildschirmgerät (40) das Verfahren nach einem der Ansprüche 1-6 bei Abarbeitung durch einen in dem genannten Berührungsbildschirmgerät enthaltenen Prozessor ausführt.

8. Berührungsbildschirmgerät (40), das einen Prozessor, einen Speicher und ein Berührungsbildschirmsystem (41) umfasst, wobei der genannte Speicher einen Satz von Verarbeitungsbefehlen gemäß Anspruch 7 umfasst.

## Revendications

1. Procédé de modification d'un signal vidéo composite généré par un serveur de composition vidéo (26), ledit signal vidéo composite étant un mélange spatial de deux ou de plusieurs flux de vidéo-conférence, **caractérisé par** les opérations consistant à :
afficher sur un écran tactile (41) une représentation graphique dudit signal vidéo composite (210), ladite représentation graphique comprenant deux ou plusieurs objets graphiques, chaque objet graphique représentant l'un desdits flux de vidéo-conférence, et lesdits deux ou plusieurs flux de vidéo-conférence et lesdits deux ou plusieurs objets graphiques étant agencés suivant un ordre correspondant et suivant des tailles et des positions relatives correspondantes ;
cas dans lequel l'étape d'affichage comprend en outre les étapes consistant à :
recevoir une configuration d'agencement qui décrit le signal vidéo composite généré actuellement, en provenance du serveur de composition vidéo (26), et
générer une représentation graphique fondée sur ladite configuration d'agencement qui décrit le signal vidéo composite généré actuellement ;
recevoir une saisie en provenance d'un utilisateur qui utilise ledit écran tactile (220) afin de modifier la représentation graphique ;
modifier ledit signal vidéo composite en vue d'une concordance avec ladite représentation graphique modifiée (230), ledit signal vidéo composite concordant avec ladite représentation graphique modifiée lorsque lesdits flux de vidéo-conférence sont mélangés dans le plan spatial en fonction de l'ordre et/ou de la position et/ou de la taille des objets graphiques sur l'écran tactile (41) ;
cas dans lequel l'étape de modification dudit signal vidéo composite (230) comprend en outre les étapes consistant à :
générer une configuration d'agencement fondée sur l'ordre et/ou la position et/ou la taille des objets graphiques sur l'écran tactile,
envoyer, audit serveur de composition vidéo (26), une instruction ou un signal comportant ladite configuration d'agencement fondée sur l'ordre et/ou la position et/ou la taille des objets graphiques sur l'écran tactile, et
donner ordre audit serveur de composition vidéo (26) de modifier le signal vidéo composite en fonction de ladite configuration d'agencement fondée sur l'ordre et/ou la position et/ou la taille des objets graphiques sur l'écran tactile.

2. Procédé selon la revendication 1, l'étape de modification de ladite représentation graphique comprenant l'étape consistant à modifier l'ordre et/ou la position et/ou la taille d'un ou de plusieurs desdits objets graphiques.

3. Procédé selon la revendication 1, ledit envoi et ladite réception de ladite configuration d'agencement étant réalisés sur une connexion TCP/IP grâce à l'utilisation de signaux de l'interface de programmation d'applications (API) (56).

4. Procédé selon la revendication 1, l'étape de modification de ladite représentation graphique comprenant l'étape consistant à enlever un ou plusieurs desdits objets graphiques ou à ajouter un objet graphique.

5. Procédé selon la revendication 3, un flux de vidéo-conférence étant mis en attente lorsqu'un objet graphique représentant ledit flux de vidéo-conférence est enlevé de la représentation graphique.

6. Procédé selon l'une quelconque des revendications précédentes, la représentation graphique comprenant en outre une ligne limite qui représente le signal vidéo composite intégral, et l'enlèvement d'un objet graphique étant effectué par glissement/déplacement d'au moins certaines parties d'un objet graphique à l'extérieur de la ligne limite.

7. Ensemble d'instructions de traitement, stockées de façon tangible dans une mémoire, sur un support ou sur un signal propagé, lesquelles obligent un dispositif à écran tactile (40) de concrétiser le procédé, tel qu'il est défini dans l'une des revendications 1 à 6, quand elles sont exécutées par un processeur inclus dans ledit dispositif à écran tactile.

8. Dispositif à écran tactile (40), comprenant un processeur, une mémoire et un système à écran tactile (41), ladite mémoire englobant un ensemble d'instructions de traitement telles qu'elles sont définies à la revendication 7.
